# FASCICULE DE BREVET EUROPEEN

(11) **EP 3 625 536 B1**
(45) Date de publication et mention de la délivrance du brevet: **16.11.2022**
(21) Numéro de dépôt: 18736973.1
(22) Date de dépôt: 18.05.2018
(51) Int. Cl.: G01N 1/10, G01N 1/22, F25J 3/04, F17C 13/02

(54) **APPAREIL DE TRAITEMENT DE LIQUIDE A ANALYSER**
VORRICHTUNG ZUR BEHANDLUNG EINER ZU ANALYSIERENDEN FLÜSSIGKEIT
APPARATUS FOR TREATING LIQUID TO BE ANALYSED

(30) Priorité: 19.05.2017 FR 1754453; 19.05.2017 FR 1754452
(43) Date de publication de la demande: 25.03.2020
(73) Titulaire: L'Air Liquide Société Anonyme pour l'Etude et l'Exploitation des Procédés Georges Claude, 75007 Paris (FR)
(72) Inventeur: LE BOT, Patrick, 94300 Vincennes (FR); CRAYSSAC, Frédéric, 78140 Velizy (FR); DAVIDIAN, Benoit, 94100 Saint Maur Des Fosses (FR); LECLERC, Mathieu, 75020 Paris (FR)
(74) Mandataire: Air Liquide
(86) Numéro de dépôt international: PCT/FR2018/051207
(87) Numéro de publication internationale: WO 2018/211230

(56) Documents cités:
- EP-A1- 0 726 434
- FR-A1- 2 839 153
- US-A- 3 123 982
- US-A- 4 991 449

## Description

La présente invention est relative à un appareil de traitement de liquide à analyser, en particulier adapté à être relié à un appareil d'analyse des traces de contaminants d'un liquide cryogénique, c'est-à-dire un liquide qui se liquéfie à une température cryogénique. Le vaporiseur d'oxygène d'un appareil de séparation d'air par distillation cryogénique est l'endroit où se concentrent beaucoup d'impuretés contenues dans l'air d'alimentation des colonnes de distillation, et que l'on n'a pas pu éliminer en amont. Le liquide est de préférence un liquide cryogénique contenant des traces d'impuretés.

La plupart des impuretés présente un coefficient d'équilibre liquide/vapeur tel que la quasi-totalité de l'impureté est présente dans la phase liquide, et une partie infinitésimale repart dans la phase gazeuse. La teneur dans la phase liquide augmente donc lors des phases de vaporisations. De plus, de nombreuses études ont montré que plus la teneur d'une impureté dans la phase liquide est élevée, plus cette impureté s'accumule sous la forme d'un dépôt solide ou liquide dans la matrice de vaporisation en aluminium. Une concentration trop élevée d'impuretés n'est donc pas acceptable car :
- Soit l'impureté est directement réactive avec l'oxygène, et peut générer des situations à fort risque d'explosion notamment lorsque l'énergie dégagée par cette impureté réactive est suffisante pour démarrer la combustion de la matrice en aluminium. C'est le cas des hydrocarbures. Les hydrocarbures lourds (C4+) ou comportant des liaisons insaturées sont notoirement stoppées en amont du système de distillation par un procédé d'adsorption. Les hydrocarbures saturés légers (C1, C2) sont peu ou pas stoppés, mais possèdent une forte solubilité dans l'oxygène liquide, ce qui rend très peu probable la présence d'une quasi phase pure d'hydrocarbures de ce type. L'hydrocarbure notoirement le plus critique est le propane, compte tenu d'un arrêt seulement partiel dans les systèmes d'adsorption, et de sa relativement faible solubilité dans l'oxygène liquide. Ainsi, le propane entrant par l'air peut s'accumuler dans le bain d'oxygène liquide jusqu'à atteindre une teneur supérieure à sa limite de solubilité et donc générer une phase pure en contact avec l'oxygène.
- Soit l'impureté n'est pas réactive, mais accélère le phénomène d'accumulation de toutes les autres impuretés, dont celles qui sont réactives. C'est le cas avec des composés dont le point de solidification est supérieur à la température opératoire de l'oxygène liquide. Le CO₂ et le N₂O sont les composés les plus critiques de ce point de vue, car ils peuvent, accidentellement ou pas, ne pas être totalement arrêtés par le système d'adsorption. Se retrouvant alors dans l'oxygène, une phase solide se crée et peut boucher les canaux de vaporisation de l'échangeur vaporisant l'oxygène liquide. Il est connu que ce mécanisme appelé en anglais « dead end boiling » ou « ébullition en voie sans issue » accélère la concentration de l'ensemble des impuretés contenues dans le liquide se vaporisant, et donc le risque lié aux hydrocarbures et à la combustion de la matrice en aluminium est augmenté.

Il est donc nécessaire et critique de surveiller la teneur en impuretés dans l'air entrant dans le système de distillation et/ou dans le bain d'oxygène afin de contrôler les quantités limites acceptables en impuretés et d'assurer la sécurité de fonctionnement de l'unité.

Cependant, les niveaux de puretés à analyser sont extrêmement bas, compte tenu des très faibles coefficients d'équilibre liquide/vapeur des constituants dans l'oxygène, en particulier pour le N₂O et CO₂.

Afin de pouvoir évaluer et contrôler les quantités limites acceptables en impuretés, il est nécessaire de mesurer des teneurs inférieures à 100ppb, préférentiellement de 10 à 50 ppb. Cependant, la fréquence de mesure peut être faible.

Les techniques d'analyses industrielles courantes pour atteindre ces niveaux de détection mettent en oeuvre des appareils complexes et requièrent une compétence d'opération importante.

FR2797325 décrit un procédé d'analyse d'un liquide selon l'art antérieur. Selon ce procédé, pendant une étape principale, un petit débit de liquide (oxygène éventuellement chargé en impuretés) entre en continu dans une enceinte et est entièrement vaporisé sous un faible écart de température.

En même temps, l'oxygène vaporisé est évacué en continu hors de l'enceinte et les impuretés sont retenues sous forme de cristaux ou de liquide à l'intérieur de l'enceinte. Il s'agit donc d'une vaporisation totale de l'oxygène liquide en circuit ouvert.

Cette étape doit être suffisamment longue (plusieurs jours en continu) de manière à pouvoir déposer une quantité d'impuretés significative et suffisante afin de pouvoir être détectée lors de l'étape suivante (remontée à une température plus élevée).

La quantité de moles d'impuretés accumulées s'effectue dans une étape suivante par la mesure de pression de l'enceinte (pendant la remontée en température en circuit fermé) et par le calcul de nombre de moles dans l'enceinte. L'évolution de la pression mesurée dans l'enceinte fermée donne la quantité de matière présente initialement dans la phase liquide ou solide ; en fonction des températures auxquelles les évolutions de pression interviennent, on a une connaissance de la nature du corps qui se vaporise. Dans cette étape, le débit de liquide a été préalablement arrêté et les impuretés sont préalablement concentrées dans une atmosphère d'oxygène gazeuse.

La détermination de la nature des impuretés est illusoire par ce principe notamment lorsqu'il y a plusieurs types d'impuretés.

Une autre manière proposée est de laver les impuretés avec un solvant pour effectuer une analyse. L'inconvénient est le fait de diluer les impuretés...

La détermination de la nature des impuretés et l'analyse quantitative de chaque impureté déposée n'est pas possible :
- sans interruption complète des différentes phases,
- sans un moyen de prélèvement au moins partiel de ces impuretés,
- et sans un moyen d'analyse extérieur au système proposé.

Un objet de l'invention est de proposer une alternative pour mesurer des teneurs en impuretés dans un liquide cryogénique, tout en utilisant des analyseurs connus et simples d'exploitation, dont la limite de détection reste de l'ordre de 1 ppm.

US3123982 décrit un appareil selon le préambule de la revendication 1. L'appareil est conçu pour pouvoir prélever un liquide en évitant les variations de concentrations de l'impureté contenue. L'invention cherche au contraire à la faire varier de manière significative.

De plus, l'art antérieur utilise une deuxième enceinte de vaporisation de liquide reliée entre une première enceinte de vaporisation de liquide, plus petite que la deuxième, et l'analyseur.

Selon un objet de l'invention, il est prévu un appareil selon la revendication 1.

Selon d'autres aspects facultatifs :
- l'appareil comprend un analyseur pour mesurer la teneur en contaminant du liquide contenu dans l'enceinte cylindrique.
- l'appareil comprend un analyseur pour mesurer la teneur en contaminant dans le liquide vaporisé provenant de l'enceinte cylindrique.
- l'analyseur est capable de mesurer une concentration d'un contaminant inférieure à 10 ppm, voire 1 ppm, voire 0.1 ppm.
- l'appareil selon l'une des revendications précédentes comprend des moyens pour fermer toute entrée et sortie de fluide de l'enceinte cylindrique.
- l'enceinte cylindrique est capable de supporter des pressions inférieures à 0.8 bars absolus.
- l'enceinte cylindrique et l'enceinte annulaire ont une paroi commune.
- l'enceinte annulaire entoure uniquement une partie de l'enceinte cylindrique sur une fraction de sa hauteur partant du bas, la fraction pouvant être entre ½ et ¾.

Selon un autre aspect de l'invention, il est prévu un appareil de séparation d'air par distillation cryogénique selon la revendication 9 ou 10.

Le liquide cryogénique peut être de l'air liquéfié, de l'oxygène liquide, de l'azote liquide, du méthane liquide, du monoxyde de carbone liquide, de l'hélium liquide etc.

Selon des aspects facultatifs de la présente invention :
- l'appareil comprend des moyens pour évacuer les impuretés de l'enceinte cylindrique ou annulaire, en particulier d'une cuve de l'enceinte
   annulaire.
- l'appareil ne comprend pas de moyen pour évacuer les impuretés de la cuve de l'enceinte cylindrique.
- les moyens pour envoyer une deuxième partie du liquide cryogénique à l'enceinte annulaire sont reliés à la cuve de l'enceinte annulaire.
- les moyens pour envoyer une première partie du liquide cryogénique à l'enceinte cylindrique sont reliés à la partie supérieure de l'enceinte cylindrique.

Selon un autre objet de l'invention, il est prévu un appareil d'analyse selon la revendication 8.

Pour cela, on vaporise partiellement une quantité de liquide connue, et ce sont les très faibles coefficients d'équilibre des contaminants dans le liquide qui vont permettre cette concentration. Le contaminant reste dans la phase liquide au fur et à mesure que celui-ci est évaporé.

Dès lors, ce qui n'était pas mesurable par un analyseur connu à cause des teneurs très (trop) basses, va le devenir. La mesure de la teneur est donc connue non pas par la variation de pression lors d'un réchauffage iso volume, mais par une analyse directe d'un liquide concentré d'un facteur maîtrisé.

Selon une variante, on mesure la teneur en au moins un contaminant dans le liquide concentré en vaporisant totalement le liquide et en surchauffant significativement au-delà de la température de vaporisation de l'impureté à analyser la vapeur ainsi formée, par exemple à au moins 10°C au-dessus de la température de vaporisation, pour être certain de ne pas avoir de traces résiduelles de liquide très concentré en contaminants, et en analysant la teneur d'au moins un contaminant dans la phase vaporisée.

Néanmoins il est possible de vouloir mesurer la teneur de cette phase liquide concentrée par une technique connue d'échantillonnage (par exemple une de celles décrites dans FR2858416 ou FR2839153).

L'essentiel est donc bien d'avoir concentré, par vaporisation partielle maîtrisée d'une quantité de liquide connue, pour pouvoir analyser ce qui ne pouvait pas l'être, plutôt que de déduire la teneur par un suivi d'évolution de pression dans une enceinte fermée comme décrit l'art antérieur.

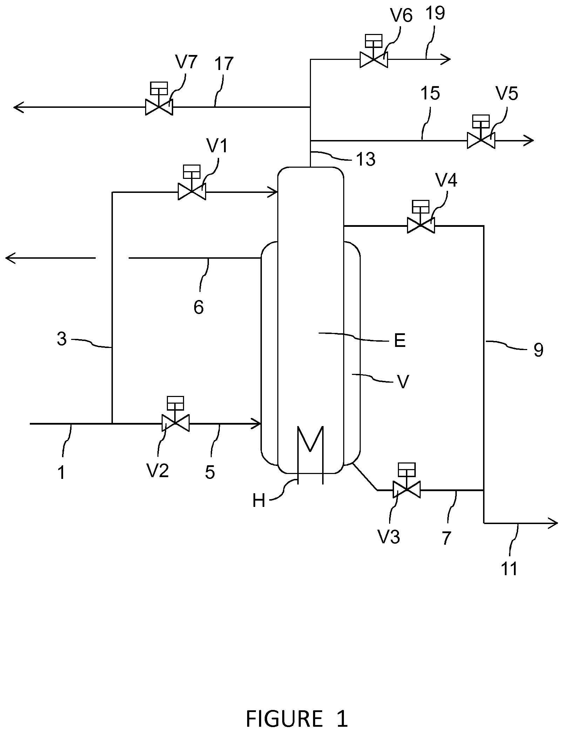

Le procédé sera décrit de manière plus détaillée en se référant à la figure, qui illustre un procédé et un appareil selon l'invention.

Un échantillon à analyser est prélevé préférentiellement du bain d'oxygène liquide en cuve de la colonne basse pression d'une double colonne de séparation d'air par distillation cryogénique. Il peut être prélevé en amont de celui-ci, entre les différents étages de vaporiseurs de la colonne basse pression si c'est le cas ou en entrée du vaporiseur situé en cuve de la colonne basse pression. L'échantillon peut également être prélevé à toutes les étapes de l'unité de production des gaz de l'air. Il peut donc être prélevé en sortie de l'épuration en tête (FEP), qui sert à épurer l'air à distiller en eau et en dioxyde de carbone, pour être préalablement liquéfié avant d'être concentré.

Pendant l'étape a) un volume (respectivement une masse) déterminé L de cet échantillon est envoyé dans une enceinte de vaporisation à travers les conduites 1 et 3 et la vanne ouverte V1. Le volume L se trouve dans l'enceinte E. La conduite 9 et la vanne V4 servent à évacuer le surplus de liquide de la partie supérieure de l'enceinte cylindrique E lors du remplissage de l'enceinte E.

Il y a un orifice calibré en sortie de l'enceinte E (vers la ligne 9 et la vanne V4).

Le débit de liquide qui peut s'en échapper est plus petit que le débit d'alimentation à travers V1. De ce fait, lors du remplissage l'enceinte est volontairement remplie de liquide jusqu'à un niveau situé au-dessus de l'orifice (et de la ligne 9 et vanne V4).

Puis la vanne d'alimentation est fermée et le surplus de liquide situé au-dessus de l'orifice s'évacue par gravité jusqu'à obtenir un niveau de liquide correspondant au point bas de l'orifice calibré.

L'intérêt de cette procédure et de cet orifice calibré est de contrôler la quantité de liquide introduite dans l'enceinte E et de faire en sorte que cette quantité de liquide introduite soit identique et reproductible à chaque cycle. Ceci permet de contrôler par la suite (et en maîtrisant également la quantité restante ou vaporisée) le facteur de concentration.

Ensuite, selon l'étape b) on n'envoie plus de liquide dans l'enceinte, la vanne V1 étant fermée. Pendant l'étape b) la vanne V6 de la conduite 19 est ouverte et les vannes V7 et V5 des conduites 17 et 15 respectivement sont fermées ainsi que la vanne V3. Le liquide L est chauffé par une source de chaleur H et se vaporise partiellement, laissant une quantité de liquide résiduel R. Un échangeur de chaleur alimenté par une source de chaleur extérieure (échange thermique avec un fluide calorigène, électricité, ondes, etc.) vaporise partiellement le liquide. La vapeur générée est évacuée de la chambre de vaporisation à travers la vanne V6 et les conduites 13, 19. La vaporisation s'effectue à pression atmosphérique ou sous vide contrôlé à travers un système de production de vide tel qu'une pompe à vide ou un éjecteur.

L'intérêt d'une vaporisation sous vide est double. Le premier est d'abaisser la température de vaporisation et par conséquent, de diminuer encore plus les coefficients d'équilibre liquide/vapeur. Le deuxième est de pouvoir augmenter l'écart de température (ΔT) entre le système de chauffage et le liquide à vaporiser afin de diminuer la durée de cycle de vaporisation. La vaporisation peut également s'effectuer sans l'usage d'une pompe à vide.

Dans ce cas, la pression de la chambre est considérée comme étant égale à la pression atmosphérique, alors qu'elle doit être légèrement supérieure à celle-ci à cause des pertes de charge.

Au bout d'une durée déterminée, la chambre de vaporisation est isolée de telle façon à ce que le rapport entre le volume (respectivement masse) de liquide initialement introduit et le volume (respectivement masse) de liquide présent dans l'enceinte de vaporisation au moment de l'isolation est parfaitement déterminé.

Cette détermination peut se faire par comptage de la quantité de matière vaporisée, ou par comptage de l'énergie introduite dans l'échangeur de vaporisation par la source de chaleur ou encore par mesure de variation du niveau de liquide et/ou de masse dans l'enceinte E.

Compte tenu du coefficient d'équilibre, les impuretés resteront au moins essentiellement contenues dans la phase liquide, et la concentration aura variée d'un facteur au moins essentiellement égal au rapport des quantités de matière, en termes de volume ou masse, initiale et finale. Pour une évaluation plus précise, la quantité d'impuretés évacuée dans la phase gazeuse peut être prise en compte dans le calcul du facteur de concentration et/ou dans le calcul de la concentration initiale. Le facteur de concentration est connu par bilan de matière entre la quantité de liquide initiale introduite, et la somme des quantités vaporisées et de liquide résiduel. La quantité de liquide ainsi vaporisée, inférieure à L, est donc précisément contrôlée, selon l'étape c) de façon à ce que la teneur en contaminant dans le liquide résiduel présent dans l'enceinte soit substantiellement égale à celle dans le liquide initial, multipliée par un facteur préalablement déterminé.

Ensuite, selon une variante de l'étape i) on mesure la teneur en contaminant du liquide résiduel directement. On prélève un échantillon de liquide résiduel, et mesure la teneur en contaminant après vaporisation totale de l'échantillon de liquide résiduel ; on déduit de la mesure de contaminant dans le liquide résiduel la teneur en contaminant dans le liquide initial.

Sinon l'étape ii) prévoit de déduire la teneur en contaminant du liquide résiduel en vaporisant totalement le liquide résiduel avec l'au moins un contaminant qu'il contient, l'enceinte de vaporisation E étant alors isolée de toute entrée ou sortie de matière et ensuite on analyse la teneur en contaminant dans le liquide résiduel vaporisé.

On mesure la teneur en contaminant du liquide résiduel en vaporisant totalement le liquide résiduel avec au moins un contaminant qu'il contient, l'enceinte de vaporisation étant alors isolée de toute entrée ou sortie de matière, ensuite on analyse la teneur en contaminant dans le liquide résiduel vaporisé et on déduit de la mesure de contaminant dans le liquide résiduel la teneur en contaminant dans le liquide initial.

La vaporisation est donc poursuivie, selon l'étape ii) jusqu'à vaporisation complète du liquide résiduel, l'enceinte de vaporisation étant isolée thermiquement pour n'avoir aucun autre échange de matière avec l'extérieur de l'enceinte, puis la phase vaporisée à l'intérieur de l'enceinte est surchauffée jusqu'à vaporisation totale des dépôts d'impuretés (jusqu'à une température de -70°C par exemple), créant ainsi une élévation de pression dans l'enceinte de vaporisation.

Il est certain que toutes les impuretés sont vaporisées si on porte l'enceinte à une température suffisamment élevée, significativement supérieure à la température de vaporisation des impuretés à la pression de l'enceinte. Pendant cette étape ii), toutes les vannes permettant une entrée de fluide dans l'enceinte ou une sortie de fluide provenant de l'enceinte sont fermées.

A l'issue de cette vaporisation totale, selon l'étape ii) la phase gazeuse est envoyée dans la ligne d'analyse 15 de l'enceinte E vers l'analyseur à travers la vanne ouverte V5. La teneur du liquide initialement prélevé ayant été multipliée par le facteur de concentration pré-défini lors de la phase de vaporisation partielle, la teneur en impureté contenue dans la vapeur en fin de séquence est donc suffisamment élevée pour être mesurée par un analyseur conventionnel (de type NDIR par exemple).

Après l'étape i) ou ii), l"enceinte sera ensuite remise en froid. Cette étape peut être réalisée par circulation interne ou préférentiellement externe d'un liquide cryogénique, par exemple le liquide cryogénique à analyser, afin de recommencer un cycle de concentration tel que précédemment défini.

La durée totale des étapes a) et b) et c) et d) y compris l'une des étapes i) ou ii) est comprise entre 15 min et 40 min, de préférence inférieure à 20 minutes.

L'appareil comporte une enveloppe V qui est une enceinte annulaire placée autour de l'enceinte E formant une espace cylindrique permettant de réguler la température de l'enceinte. La partie supérieure de l'enceinte E n'est pas contenue dans l'enveloppe V.

A la fin de l'étape i) ou ii), il est nécessaire de refroidir l'enceinte par une étape e). Si on met en froid simplement en envoyant le liquide à analyser dans l'enceinte, on le vaporise partiellement lors de cette phase et on fausse donc l'analyse d'impuretés. Il faut donc une mise en froid par un autre moyen. Cette étape sera comprise dans la durée entre 15 et 40 min.

Pendant l'étape d) de refroidissement de l'enceinte E, l'espace V est rempli par un liquide à une température inférieure à la température d'équilibre de liquide à analyser. De cette façon que le liquide à analyser est envoyé dans l'enceinte pendant l'étape a), ce dernier reste bien complètement liquide. Dans l'exemple de la figure, une partie du liquide à analyser est envoyée par la conduite 5 et la vanne V2 vers l'espace V pour refroidir l'enceinte E.

Comme l'espace V est mis en communication à la pression atmosphérique, l'espace rempli est plus froid que l'oxygène liquide provenant de la colonne. Alternativement, le liquide utilisé pour mettre en froid l'enceinte E pourrait être de l'azote liquide, mais le système serait plus compliqué.

De préférence, le liquide contenu dans l'espace V est enlevé pendant les étapes b) et c) pour que la source de chaleur H chauffe uniquement le liquide présent dans l'enceinte E. Le liquide est retiré par la conduite 7 et la vanne V3. La conduite 6 permet de sortir du liquide vaporisé de l'espace V.

Par rapport au système décrit dans l'état de l'art FR2797325, cette double enveloppe E, V est rendue nécessaire par le mode de fonctionnement différent des appareils.
- Celui selon l'invention fonctionne par concentration dans la phase liquide des impuretés. Le temps de cycle est donc court et il est important d'être précis sur la quantité d'impuretés déposée. Ainsi, on veut éviter de "concentrer" par dépôt d'impuretés qui se produirait par la mise en froid "interne" comme décrit ci-dessus
- Celui de FR2797325 fonctionne par cryo-piégeage et accumulation d'impureté sur une longue période. Du coup, la quantité déposée lors de la mise en froid du système après chauffage devient négligeable devant la quantité piégée sur l'ensemble de la période d'accumulation.

A la lecture de cette description, l'homme de l'art comprendra que la quantité de produit liquide restante à la fin de la phase de vaporisation partielle sera nécessaire et suffisante pour assurer, lors de la phase d'analyse, une quantité de matière nécessaire au débit de balayage de la ligne d'analyse et à une durée d'analyse suffisante pour permettre une détermination précise de la mesure.

## Revendications

1. Appareil de traitement de liquide à analyser, en particulier adapté à être relié à un analyseur de la teneur d'au moins un contaminant dans un liquide cryogénique, comprenant une enceinte cylindrique (E) ayant une cuve, une enceinte annulaire (V) disposée autour de l'enceinte cylindrique, des moyens (1,3,5) pour diviser un débit de liquide cryogénique en deux, des moyens pour envoyer une première partie (3) du liquide cryogénique à l'enceinte cylindrique, des moyens pour envoyer une deuxième partie (5) du liquide cryogénique à l'enceinte annulaire, une conduite d'analyse (13, 15) reliée à l'enceinte cylindrique pour permettre le passage de liquide vaporisé et adaptée à être reliée à l'analyseur, une conduite (6) reliée à l'enceinte annulaire pour permettre le passage de liquide vaporisé, et des moyens (V1) pour arrêter l'envoi de liquide cryogénique vers l'enceinte cylindrique **caractérisé en ce qu'**il comprend un réchauffeur (H) pour chauffer la cuve de l'enceinte cylindrique et une conduite de soutirage (9) pour soutirer du liquide de l'enceinte cylindrique (E) munie d'un orifice calibré (V4) et reliée à une partie supérieure de l'enceinte cylindrique (E), la partie supérieure de l'enceinte cylindrique (E) n'étant pas contenue dans l'enceinte annulaire (V).

2. Appareil selon la revendication 1 comprenant un analyseur pour mesurer la teneur en contaminant du liquide contenu dans l'enceinte cylindrique.

3. Appareil selon l'une des revendications précédentes comprenant des moyens (V1, V3, V5, V6, V7) pour fermer toute entrée et sortie de fluide de l'enceinte cylindrique (E).

4. Appareil selon l'une des revendications précédentes dans lequel l'enceinte cylindrique (E) et l'enceinte annulaire (V) ont une paroi commune.

5. Appareil selon l'une des revendications précédentes dans lequel l'enceinte annulaire (V) entoure uniquement une partie de l'enceinte cylindrique (E) sur une fraction de sa hauteur partant du bas, la fraction pouvant être entre ½ et ¾.

6. Appareil selon la revendication 1 dans lequel les moyens pour
envoyer une première partie (3) du liquide cryogénique à l'enceinte cylindrique sont reliés à la partie supérieure de l'enceinte cylindrique (E).

7. Appareil selon une des revendications précédentes comprenant des moyens (7, 11, V3) pour évacuer les impuretés de l'enceinte cylindrique (E) ou annulaire (V), en particulier d'une cuve de l'enceinte annulaire.

8. Appareil d'analyse comprenant un appareil selon l'une des revendications précédentes ainsi qu'un analyseur pour mesurer la teneur en contaminant dans le liquide vaporisé provenant de l'enceinte cylindrique, la conduite d'analyse (13,15) étant reliée directement à l'analyseur sans passer par une deuxième enceinte de vaporisation.

9. Appareil de séparation d'air par distillation cryogénique comprenant un appareil de traitement ou d'analyse selon l'une des revendications précédentes, une unité de purification par adsorption, un système de colonnes de séparation d'air par distillation cryogénique d'un gaz purifié dans l'unité de purification ainsi que des moyens de prélèvement d'un fluide sous état gazeux et des moyens pour l'envoyer sous forme liquide à l'appareil de traitement, les moyens de prélèvement d'un fluide sous état gazeux étant pour prélever du gaz en aval de l'unité de purification, I le liquide cryogénique étant le gaz prélevé en aval de l'unité de purification et ensuite liquéfié.

10. Appareil de séparation d'air par distillation cryogénique comprenant un appareil de traitement ou d'analyse selon l'une des revendications précédentes, une unité de purification par adsorption, un système de colonnes de séparation d'air par distillation cryogénique d'un gaz purifié dans l'unité de purification et ainsi que des moyens de prélèvement d'un fluide sous état liquide et des moyens pour l'envoyer sous forme liquide à l'appareil de traitement, les moyens de prélèvement d'un fluide sous état liquide pour prélever un liquide en cuve d'une colonne du système ou un liquide intermédiaire d'une colonne du système, le liquide cryogénique étant le liquide de cuve d'une colonne du système ou le liquide intermédiaire d'une colonne du système.

## Patentansprüche

1. Gerät zur Behandlung einer zu analysierenden Flüssigkeit, das insbesondere geeignet ist, mit einem Analysator für den Gehalt mindestens eines Kontaminanten in einer kryogenen Flüssigkeit verbunden zu werden, umfassend einen zylindrischen Behälter (E), der einen Sumpf besitzt, einen ringförmigen Behälter (V), der um den zylindrischen Behälter herum angeordnet ist, Mittel (1, 3, 5), um einen Volumenstrom kryogener Flüssigkeit zweizuteilen, Mittel, um einen ersten Teil (3) der kryogenen Flüssigkeit zu dem zylindrischen Behälter zu leiten, Mittel, um einen zweiten Teil (5) der kryogenen Flüssigkeit zu dem ringförmigen Behälter zu leiten, eine Analyseleitung (13, 15), die mit dem zylindrischen Behälter verbunden ist, um den Durchgang von verdampfter Flüssigkeit zuzulassen, und geeignet ist, mit dem Analysator verbunden zu werden, eine Leitung (6), die mit dem ringförmigen Behälter verbunden ist, um den Durchgang von verdampfter Flüssigkeit zuzulassen, und Mittel (V1), um das Leiten von kryogener Flüssigkeit zu dem zylindrischen Behälter zu stoppen, **dadurch gekennzeichnet, dass** es ein Heizelement (H) umfasst, um den Sumpf des zylindrischen Behälters zu beheizen, und eine Abzugsleitung (9), um Flüssigkeit aus dem zylindrischen Behälter (E) abzuziehen, die mit einer kalibrierten Bohrung (V4) versehen ist und mit einem oberen Teil des zylindrischen Behälters (E) verbunden ist, wobei der obere Teil des zylindrischen Behälters (E) nicht in dem ringförmigen Behälter (V) enthalten ist.

2. Gerät nach Anspruch 1, umfassend einen Analysator, um den Gehalt an Kontaminanten der in dem zylindrischen Behälter enthaltenen Flüssigkeit zu messen.

3. Gerät nach einem der vorhergehenden Ansprüche, umfassend Mittel (V1, V3, V5, V6, V7), um jeden Fluideinlass und -auslass des zylindrischen Behälters (E) zu schließen.

4. Gerät nach einem der vorhergehenden Ansprüche, bei dem der zylindrische Behälter (E) und der ringförmige Behälter (V) eine gemeinsame Wand haben.

5. Gerät nach einem der vorhergehenden Ansprüche, bei dem der ringförmige Behälter (V) nur einen Teil des zylindrischen Behälters (E) über einen Bruchteil seiner Höhe von unten aus umgibt, wobei der Bruchteil zwischen 1/2 und 3/4 betragen kann.

6. Gerät nach Anspruch 1, bei dem die Mittel, um einen ersten Teil (3) der kryogenen Flüssigkeit zu dem zylindrischen Behälter zu leiten, mit dem oberen Teil des zylindrischen Behälters (E) verbunden sind.

7. Gerät nach einem der vorhergehenden Ansprüche, umfassend Mittel (7, 11, V3), um die Verunreinigungen aus dem zylindrischen (E) oder ringförmigen (V) Behälter abzuführen, insbesondere aus einem Sumpf des ringförmigen Behälters.

8. Analysegerät, umfassend ein Gerät nach einem der vorhergehenden Ansprüche sowie einen Analysator, um den Gehalt an Kontaminanten in der aus dem zylindrischen Behälter kommenden verdampften Flüssigkeit zu messen, wobei die Analyseleitung (13, 15) direkt mit dem Analysator verbunden ist, ohne einen zweiten Verdampfungsbehälter zu durchlaufen.

9. Gerät zum Abtrennen von Luft durch kryogene Destillation, umfassend ein Behandlungs- oder Analysegerät nach einem der vorhergehenden Ansprüche, eine Einheit zur Reinigung durch Adsorption, ein System aus Kolonnen zum Abtrennen von Luft durch kryogene Destillation eines in der Reinigungseinheit gereinigten Gases sowie Mittel zur Entnahme eines Fluids im gasförmigen Zustand und Mittel, um es in flüssiger Form zu dem Behandlungsgerät zu leiten, wobei die Mittel zur Entnahme eines Fluids im gasförmigen Zustand zur Entnahme von Gas stromab der Reinigungseinheit dient, wobei die kryogene Flüssigkeit das das stromab der Reinigungseinheit entnommene und anschließend verflüssigte Gas ist.

10. Gerät zum Abtrennen von Luft durch kryogene Destillation, umfassend ein Behandlungs- oder Analysegerät nach einem der vorhergehenden Ansprüche, eine Einheit zur Reinigung durch Adsorption, ein System aus Kolonnen zum Abtrennen von Luft durch kryogene Destillation eines in der Reinigungseinheit gereinigten Gases sowie Mittel zur Entnahme eines Fluids im flüssigen Zustand und Mittel, um es in flüssiger Form zu dem Behandlungsgerät zu leiten, wobei die Mittel zur Entnahme eines Fluids im flüssigen Zustand zur Entnahme einer Flüssigkeit im Sumpf einer Kolonne des Systems oder eine Zwischenflüssigkeit einer Kolonne des Systems dient, wobei die kryogene Flüssigkeit die Sumpfflüssigkeit einer Kolonne des Systems oder die Zwischenflüssigkeit einer Kolonne des Systems ist.

## Claims

1. Apparatus for treating liquid to be analysed, which is in particular suitable for being connected to an analyser of the content of at least one contaminant in a cryogenic liquid, comprising a cylindrical chamber (E) having a tank, an annular chamber (V) positioned around the cylindrical chamber, means (1,3,5) for dividing a flow of cryogenic liquid in two, means for sending a first portion (3) of the cryogenic liquid to the cylindrical chamber, means for sending a second portion (5) of the cryogenic liquid to the annular chamber, an analysis line (13, 15) connected to the cylindrical chamber to allow the passage of vaporized liquid and which is suitable for being connected to the analyser, a line (6) connected to the annular chamber to allow the passage of vaporized liquid and means (V1) for stopping the sending of cryogenic liquid to the cylindrical chamber **characterized in that** it comprises a heater (H) for heating the tank of the cylindrical chamber and a withdrawal line (9) for withdrawing liquid from the cylindrical chamber (E) provided with a calibrated orifice (V4) and connected to an upper part of the cylindrical chamber (E), the upper part of the cylindrical chamber (E) not being contained in the annular chamber (V).

2. Apparatus according to Claim 1, comprising an analyser for measuring the contaminant content of the liquid contained in the cylindrical chamber.

3. Apparatus according to either of the preceding claims, comprising means (V1, V3, V5, V6, V7) for closing any fluid inlet and outlet of the cylindrical chamber (E) .

4. Apparatus according to one of the preceding claims, in which the cylindrical chamber (E) and the annular chamber (V) have a common wall.

5. Apparatus according to one of the preceding claims, in which the annular chamber (V) surrounds only part of the cylindrical chamber (E) on a fraction of its height from the bottom, the fraction possibly being between ½ and ¾.

6. Apparatus according to Claim 1, in which the means for sending a first portion (3) of the cryogenic liquid to the cylindrical chamber are connected to the upper part of the cylindrical chamber (E).

7. Apparatus according to one of the preceding claims, comprising means (7, 11, V3) for discharging the impurities from the cylindrical chamber (E) or annular chamber (V), in particular from a tank of the annular chamber.

8. Analysis apparatus comprising an apparatus according to one of the preceding claims and also an analyser for measuring the contaminant content in the vaporized liquid coming from the cylindrical chamber, the analysis line (13, 15) being directly connected to the analyser without passing through a second vaporization chamber.

9. Apparatus for separating air by cryogenic distillation, comprising a treatment or analysis apparatus according to one of the preceding claims, an adsorption purification unit, a system of columns for separating air by cryogenic distillation of a gas purified in the purification unit, and also means for drawing off a fluid in the gaseous state and means for sending it in liquid form to the treatment apparatus, the means for drawing off a fluid in the gaseous state being for drawing off gas downstream of the purification unit, the cryogenic liquid being the gas drawn off downstream of the purification unit and then liquefied.

10. Apparatus for separating air by cryogenic distillation, comprising a treatment or analysis apparatus according to one of the preceding claims, an adsorption purification unit, a system of columns for separating air by cryogenic distillation of a gas purified in the purification unit, and also means for drawing off a fluid in the liquid state and means for sending it in liquid form to the treatment apparatus, the means for drawing off a fluid in the liquid state being for drawing off a bottom liquid from a column of the system or an intermediate liquid from a column of the system, the cryogenic liquid being the bottom liquid from a column of the system or the intermediate liquid from a column of the system.
